# EUROPEAN PATENT APPLICATION

(11) **EP 2 073 107 A1**
(43) Date of publication of application: **24.06.2009**
(21) Application number: 07122729.2
(22) Date of filing: 10.12.2007
(51) Int. Cl.: G06F 3/044, G06F 3/048

(54) **Electronic device and touch screen having discrete touch-sensitive areas**

(71) Applicant: Research In Motion Limited, Waterloo, Ontario N2L 3W8 (CA)
(72) Inventor: Hui, Edward, Waterloo Ontario N2T 2J3 (CA); Lowles, Robert, Waterloo Ontario N2T 2J5 (CA); Ma, ZhongMing, Waterloo Ontario N2V 2A3 (CA)
(74) Representative: Rickard, David John

(57) **Abstract**

An electronic device includes a base, a touch screen display, and operational components. The touch screen display is connected to the base and includes a display device and a touch-sensitive overlay disposed on the display device. The touch-sensitive overlay comprises at least one capacitive touch sensor circuit layer disposed on a substrate and patterned with discrete circuits. Ones of the discrete circuits provide associated discrete touch-sensitive areas on an outer touch surface of the touch screen display. The operational components include a controller connected to the touch-sensitive overlay and a processor connected to the controller and the display device for providing a graphical user interface.

## Description

The present application relates generally to multi-touch-sensitive touch screen devices.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and easy portability. Smaller devices are generally desirable for portability. A touch screen input/output device is particularly useful on such handheld devices as such handheld devices are small and are therefore limited in space available for user input and output devices. Further, the screen content on the touch screen devices can be modified depending on the functions and operations being performed.

Touch screen devices are constructed of a display, such as a liquid crystal display, with a touch-sensitive overlay. These devices suffer from disadvantages, however. For example, touch-screen devices are limited to determining a single touch input as simultaneous touch events at more than one location on the touch screen display cannot be discerned.

Improvements in touch screen devices are therefore desirable.

### GENERAL

According to one aspect, there may be provided a touch screen display unit. The touch screen display unit may comprise a display device, and a touch-sensitive overlay disposed on the display device. The touch-sensitive overlay may comprise at least one capacitive touch sensor circuit layer disposed on a substrate and patterned with discrete circuits. Ones of the discrete circuits may provide associated discrete touch-sensitive areas on an outer touch surface of the touch-sensitive overlay.

According to another aspect there may be provided an electronic device. The electronic device may comprise a base, a touch screen display, and operational components. The touch screen display is connected to the base and includes a display device and a touch-sensitive overlay disposed on the display device. The touch-sensitive overlay may comprise at least one capacitive touch sensor circuit layer disposed on a substrate and patterned with discrete circuits. Ones of the discrete circuits may provide associated discrete touch-sensitive areas on an outer touch surface of the touch screen display. The operational components may comprise a controller connected to the touch-sensitive overlay and a processor connected to the controller and the display device for providing a graphical user interface.

Advantageously, multiple simultaneous touches on the touch screen display can be discerned. Multiple touches on the touch screen display can be discerned as touches on each of the discrete touch-sensitive areas can be detected.

In one particular aspect, a single one of the at least one capacitive touch sensor circuit layer may comprise at least two discrete circuits providing associated discrete touch-sensitive areas on an outer touch surface thereof.

In another aspect, the at least one capacitive touch sensor circuit layer may comprise a single capacitive touch sensor circuit layer.

In another aspect, the outer touch surface may comprise a cover layer disposed on the at least one capacitive touch sensor circuit layer for providing a protective cover. The cover layer may comprise ridges defining at least one of the touch-sensitive areas.

In yet another aspect, one of the discrete circuits may be sized for providing a touch-sensitive area for a single virtual button.

In still another aspect, ones of the discrete circuits may be sized for providing respective touch-sensitive areas for respective single virtual buttons.

### BRIEF DESCRIPTION OF THE DRAWINGS

Embodiments of the present application will now be described, by way of example only, with reference to the attached Figures, wherein:

Figure 1 is a block diagram of certain components, including certain internal components of a portable electronic device according to one embodiment;

Figure 2A is a top view of the portable electronic device with certain hidden features shown in ghost outline for the purpose of illustration;

Figure 2B is a sectional side view of the portable electronic device of Figure 1;

Figure 3 is a sectional side view of a touch screen display according to one embodiment (not to scale);

Figure 4A is a top view of a touch sensor circuit layer of the touch screen display of Figure 3;

Figure 4B is a top view of another touch sensor circuit layer of the touch screen display of Figure 3;

Figure 5 is a top view of a screen displayed on the touch screen display of Figure 3;

Figure 6 is a sectional side view of a touch screen display of the portable electronic device according to another embodiment; and

Figure 7 is a top view of a touch sensor circuit layer of a touch screen display of Figure 6.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a touch screen display and to a portable electronic device including a touch screen display. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

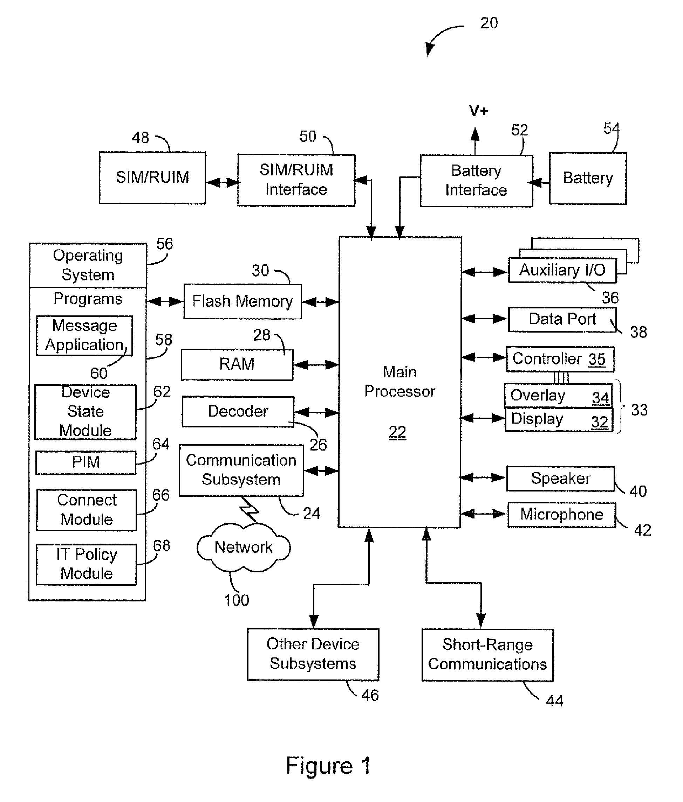

Referring first to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 100. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 100 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 100 associated with portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 that make up a touch screen display 33, an auxiliary input/output (I/O) subsystem 36, a data port 38, a speaker 40, a microphone 42, short-range communications 44 and other device subsystems 46. The processor 22 interacts with the touch-sensitive overlay 34 via an electronic controller 35.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 100, and device-resident functions such as a calculator or task list.

The portable electronic device 20 can send and receive communication signals over the wireless network 100 after network registration or activation procedures have been completed. Network access is associated with a subscriber or user of the portable electronic device 20. To identify a subscriber according to the present embodiment, the portable electronic device 20 uses a SIM/RUIM card 48 (i.e. Subscriber Identity Module or a Removable User Identity Module) inserted into a SIM/RUIM interface 50 for communication with a network such as the network 100. The SIM card or RUIM 48 is one type of a conventional "smart card" that can be used to identify a subscriber of the portable electronic device 20 and to personalize the portable electronic device 20, among other things. In the present embodiment the portable electronic device 20 is not fully operational for communication with the wireless network 100 without the SIM card/RUIM 48. By inserting the SIM card/RUIM 48 into the SIM/RUIM interface 50, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 48 includes a processor and memory for storing information. Once the SIM card/RUIM 48 is inserted into the SIM/RUIM interface 50, it is coupled to the processor 22. In order to identify the subscriber, the SIM card/RUIM 48 can include some user parameters such as an International Mobile Subscriber Identity (IMSI). An advantage of using the SIM card/RUIM 48 is that a subscriber is not necessarily bound by any single physical portable electronic device. The SIM card/RUIM 48 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 52 for receiving one or more rechargeable batteries 54. In at least some embodiments, the battery 54 can be a smart battery with an embedded microprocessor. The battery interface 52 is coupled to a regulator (not shown), which assists the battery 54 in providing power V+ to the portable electronic device 20. Although current technology makes use of a battery, future technologies such as micro fuel cells may provide the power to the portable electronic device 20.

The portable electronic device 20 also includes an operating system 56 and software components 58 to 68 which are described in more detail below. The operating system 56 and the software components 58 to 68 that are executed by the processor 22 are typically stored in a persistent store such as the flash memory 30, which may alternatively be a read-only memory (ROM) or similar storage element (not shown). Those skilled in the art will appreciate that portions of the operating system 56 and the software components 58 to 68, such as specific device applications, or parts thereof, may be temporarily loaded into a volatile store such as the RAM 28. Other software components can also be included, as is well known to those skilled in the art.

The subset of software applications 58 that control basic device operations, including data and voice communication applications, will normally be installed on the portable electronic device 20 during its manufacture. Other software applications include a message application 60 that can be any suitable software program that allows a user of the portable electronic device 20 to send and receive electronic messages. Various alternatives exist for the message application 60 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 62, a Personal Information Manager (PIM) 64, and other suitable modules (not shown). The device state module 62 provides persistence, i.e. the device state module 62 ensures that important device data is stored in persistent memory, such as the flash memory 30, so that the data is not lost when the portable electronic device 20 is turned off or loses power.

The PIM 64 includes functionality for organizing and managing data items of interest to the user, such as, but not limited to, e-mail, contacts, calendar events, voice mails, appointments, and task items. A PIM application has the ability to send and receive data items via the wireless network 100. PIM data items may be seamlessly integrated, synchronized, and updated via the wireless network 100 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 66, and an information technology (IT) policy module 68. The connect module 66 implements the communication protocols that are required for the portable electronic device 20 to communicate with the wireless infrastructure and any host system, such as an enterprise system, that the portable electronic device 20 is authorized to interface with.

The connect module 66 includes a set of APIs that can be integrated with the portable electronic device 20 to allow the portable electronic device 20 to use any number of services associated with the enterprise system. The connect module 66 allows the portable electronic device 20 to establish an end-to-end secure, authenticated communication pipe with the host system. A subset of applications for which access is provided by the connect module 66 can be used to pass IT policy commands from the host system to the portable electronic device 20. This can be done in a wireless or wired manner. These instructions can then be passed to the IT policy module 68 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 100, the auxiliary I/O subsystem 36, the data port 38, the short-range communications subsystem 44, or any other suitable device subsystem 46. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 38 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 38 can be any suitable port that enables data communication between the portable electronic device 20 and another computing device. The data port 38 can be a serial or a parallel port. In some instances, the data port 38 can be a USB port that includes data lines for data transfer and a supply line that can provide a charging current to charge the battery 54 of the portable electronic device 20.

The short-range communications subsystem 44 provides for communication between the portable electronic device 20 and different systems or devices, without the use of the wireless network 100. For example, the short-range communications subsystem 44 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 36. A subscriber may also compose data items, such as e-mail messages, for example, using the touch-sensitive overlay 34 on the display 32 that form the touch screen display 33, and possibly the auxiliary I/O subsystem 36. The auxiliary subsystem 36 may include devices such as: a mouse, track ball, infrared fingerprint detector, or a roller wheel with dynamic button pressing capability. A composed item may be transmitted over the wireless network 100 through the communication subsystem 24.

For voice communications, the overall operation of the portable electronic device 20 is substantially similar, except that the received signals are output to the speaker 40, and signals for transmission are generated by the microphone 42. Alternative voice or audio I/O subsystems, such as a voice message recording subsystem, can also be implemented on the portable electronic device 20. Although voice or audio signal output is accomplished primarily through the speaker 40, the display 32 can also be used to provide additional information such as the identity of a calling party, duration of a voice call, or other voice call related information.

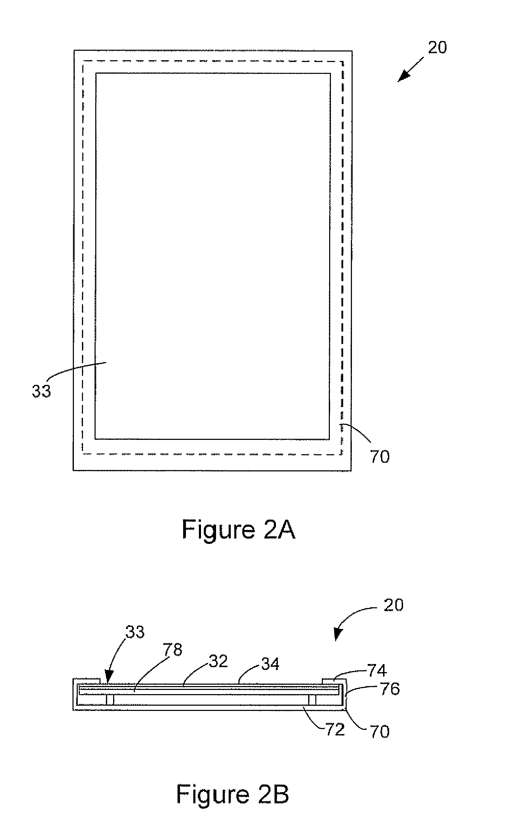

Reference is now made to Figures 2A and 2B which show views of a portable electronic device 20 including a touch screen display according to an exemplary embodiment. The portable electronic device 20 includes a housing 70 that includes a base 72 and a frame 74 spaced from the base 72 by sidewalls 76. The frame 74 frames the touch screen display 33. The base 72 includes a plate (not shown) that is releasably attached for insertion and removal of, for example, the battery 54 and the SIM card 48 described above. It will be appreciated that the base 72, the sidewalls 76 and the frame 74 can be injection molded, for example. The frame 74 is sized and shaped to frame a window in which the touch screen display 33 is exposed for input by user contact with the touch-sensitive overlay 34 of the touch screen display 33 and for displaying output on the display device 32. The touch screen display 33 is supported by the support 78. The components including the electronic controller 35, the processor 22 and other operational components including those described above with reference to Figure 1 are housed within the housing 70, between the base 72 and the touch screen display 33, to provide the functionality of the portable electronic device 20.

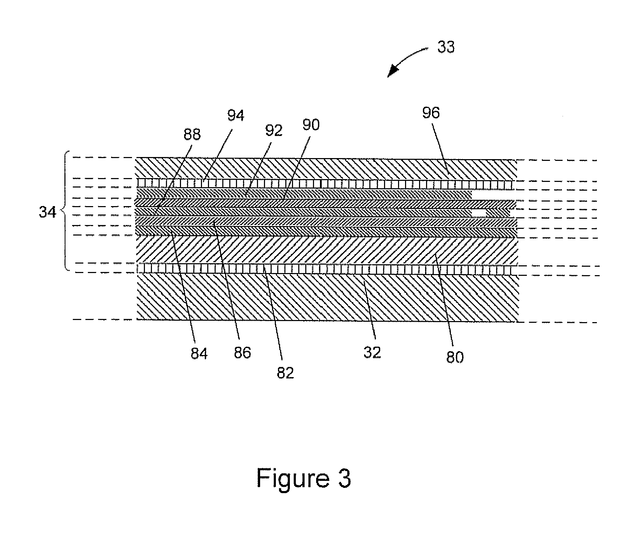

Referring now to Figure 3, there is shown a representative sectional side view of the touch screen display 33 according to one exemplary embodiment (not to scale). The touch screen display 33 is a capacitive touch-screen display 33 including the display device 32, which in the present embodiment is an LCD display 32, and the touch-sensitive overlay 34. The touch-sensitive overlay 34 includes a number of layers in a stack and is fixed to the LCD display 32 via a suitable optically clear adhesive 82 such as an Optically Clear Laminating Adhesive available from 3M^{™}. In the present example, the layers include a substrate 80 fixed to the LCD display 32 by a suitable adhesive 82, a ground shield layer 84 deposited on the substrate 80, a first thin-film deposited barrier layer 86, a first capacitive touch sensor circuit layer 88, a second thin-film deposited barrier layer 90, a second capacitive touch sensor circuit layer 92 and a cover layer 96 fixed to the second capacitive touch sensor circuit layer 92 by a suitable adhesive 94.

In the present embodiment, the substrate 80 is a transparent polyethylene terephthalate (polyester) plate. It will be appreciated that other suitable substrate materials can be used such as, for example, glass or other suitable dielectric sheet.

The ground shield layer 84 can be a layer of indium tin oxide (ITO) applied to the substrate 80 by, for example, sputter coating on the substrate 80, and connected to a ground for shielding the first and second capacitive touch sensor circuit layers 88, 92 from the LCD display 32. It will be appreciated that the ground shield layer 84 can be any suitable transparent material for providing a ground shield connected to a ground or a voltage supply for shielding.

The first thin film deposited barrier layer 86 is a barrier layer of a suitable non-conductive material such as silicon dioxide or other suitable material for electrically isolating the ground shield layer 84 from the first capacitive touch sensor circuit layer 88. The first thin film deposited barrier layer 86 is a transparent coating of suitable thickness deposited on the ground shield layer 84 by, for example, physical vapour deposition, to provide a thin electrical barrier layer of, for example, between 100nm and 300nm.

The first capacitive touch sensor circuit layer 88 is patterned on the first thin film deposited barrier layer 86. The first capacitive touch sensor circuit layer 88 can be a layer of indium tin oxide (ITO) patterned on the first thin film deposited barrier layer. The pattern of the ITO layer is described further below.

The second thin film deposited barrier layer 90 is of a suitable non-conductive material, such as silicon dioxide or other suitable material, for electrically isolating the first capacitive touch sensor circuit layer 88 from the second capacitive touch sensor circuit layer 92. The second thin film deposited barrier layer 90 is a transparent coating deposited on the first capacitive touch sensor circuit layer 88 by, for example, physical vapour deposition, to provide a thin electrical barrier layer.

The second capacitive touch sensor circuit layer 92 is patterned on the second thin film deposited barrier layer 90. The second capacitive touch sensor circuit layer according to the present embodiment is a patterned layer of indium tin oxide (ITO) disposed on the second thin film deposited barrier layer.

Finally, a transparent cover layer 96 provides a protective covering over the second capacitive touch sensor circuit layer 92. The protective covering according to the present embodiment is a transparent polymer lens that is fixed to the surface of the second touch sensor circuit layer 92 using a suitable optical adhesive 94. The transparent cover layer 96 can alternatively, be coated on the second capacitive touch sensor circuit layer 92 by, for example, spray coating, rather than adhering a pre-formed lens to the stack.

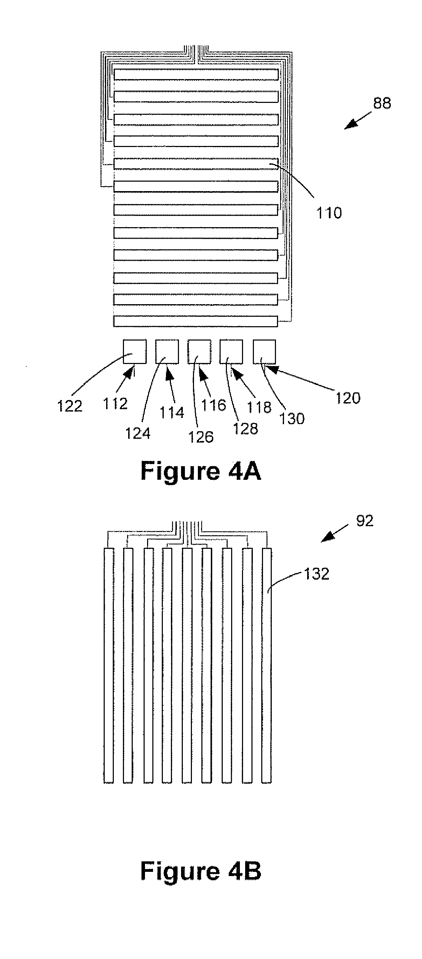

As described, the first capacitive touch sensor circuit layer 88 is patterned on the first thin film deposited barrier layer 86, with discrete circuits for providing associated discrete touch-sensitive areas on the touch screen display 33. Referring now to Figure 4A, there is shown an exemplary first capacitive touch sensor circuit layer 88 according to one embodiment. As shown, the first capacitive touch sensor circuit layer 88 includes a first matrix portion 110 and five discrete circuits 112, 114, 116, 118, 120 sized and shaped for providing discrete touch-sensitive areas in the form of virtual buttons. Each of the five discrete circuits 112, 114, 116, 118, 120, includes electrically separate conductive lead lines for connecting to the electronic controller 35 shown in Figure 1 via, for example, a printed circuit board (not shown) with copper traces, as will be understood by those skilled in the art. The lead lines can be formed of any suitable conductive material such as silver, for example. In the present example, the first matrix portion 110 covers a majority of the area of the first capacitive touch sensor circuit layer 88 and includes a pattern of bars extending across the touch screen display 33. It will be appreciated that the pattern that extends across the touch screen display 33 is not limited to bars as shown in Figure 4A. Instead, the layer of, for example, ITO can be patterned in any suitable shape such as repeating, connected rows of triangles or diamond shapes, for example. Conductive lead lines connect to all of the bars.

The capacitive touch sensor circuit layer 88 includes the five discrete circuits 112, 114, 116, 118, 120 that, in the present embodiment, include square-shaped conductive pads 122, 124, 126, 128, 130 of, for example, ITO that are each separately connected to the electronic controller 35 via respective lead lines. Each of the five pads 122, 124, 126, 128, 130 is appropriately sized to form a respective one of five of the discrete touch-sensitive areas for providing respective virtual buttons on the touch screen display 33. Thus, each pad is sized to form a respective discrete touch-sensitive area for finger actuation by touching the touch screen display 33 causing a signal to be sent to the electronic controller 35 in response to a change in the electric field as a result of capacitive coupling between the finger of the user and the respective one of the pads 122, 124, 126, 128, 130. Thus, a signal is sent from a respective one of the pads 122, 124, 126, 128, 130 to the electronic controller 35 in response to a touch event at the corresponding touch-sensitive area on the touch screen display 33. In the present example, the X and Y co-ordinates of a touch event at any of the virtual buttons provided by the discrete touch-sensitive areas corresponding to the pads 122, 124, 126, 128, 130 are not determined. A touch event at any of the virtual buttons associated with the pads 122, 124, 126, 128, 130 results in a respective signal from the corresponding one of the pads 122, 124, 126, 128, 130 which is determined by the processor 22 as a touch event at the location of the respective one of the virtual buttons.

The second capacitive touch sensor circuit layer 92 is patterned on the second thin film deposited barrier layer 90. Referring now to Figure 4B, there is shown an exemplary second capacitive touch sensor circuit layer 92. As shown, the second capacitive touch sensor circuit layer 92 includes a second matrix portion 132 with conductive lead lines for connecting to the electronic controller 35 shown in Figure 1 via, for example, the printed circuit board (not shown). Again, the lead lines can be formed of any suitable conductive material such as silver, for example. In the present example, the second matrix portion 132 includes a pattern of bars extending transverse to the direction that the bars of the first matrix portion 110 extend, on a portion of the touch screen display 33 that corresponds with the first matrix portion 110 of the first capacitive touch sensor circuit layer 92. Thus, the second matrix portion 132 is sized to overlie the first matrix portion 110. The pattern of bars of the second matrix portion 132 extends generally perpendicularly to the pattern of bars of the first matrix portion 110. Again, it will be appreciated that the pattern is not limited to bars as shown in Figure 4B. Instead, the ITO layer can be patterned in any suitable shape such as repeating, connected lines of triangles or diamond shapes, for example. Conductive lead lines connect to all of the bars.

The first matrix portion 110 of the first capacitive touch sensor circuit layer 88 and the second matrix portion 132 of the second capacitive touch sensor circuit layer 92 both correspond to a single touch-sensitive area on the touch screen display 33. The location of a touch event on the touch-sensitive area on the touch screen display 33 that corresponds with the first matrix portion 110 and the second matrix portion 132 is determined using both of the capacitive touch sensor circuit layers 88, 92. The X and Y location of a touch event are determined with the X location determined by a signal generated as a result of capacitive coupling with one of the first matrix portion 110 and second matrix portion 132 and the Y location determined by the signal generated as a result of capacitive coupling with the other of the first matrix portion 110 and second matrix portion 132. Again, each of the first matrix portion 110 and second matrix portion 132 provides a signal to the controller 35 in response to capacitive coupling from a touch by a user on the touch-sensitive area of the touch screen display 33, resulting in a change in the electric field of each of the first matrix portion 110 and second matrix portion 132. The signals represent the respective X and Y touch location.

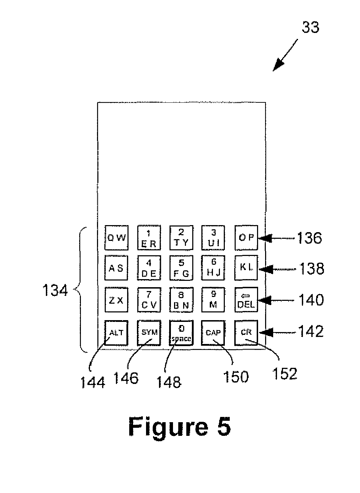

Reference is now made to Figure 5, which shows an exemplary screen view of the touch screen display 33 according to the embodiment of Figures 4A and 4B. As shown, the exemplary screen view includes a virtual keyboard 134 including four rows 136, 138, 140, 142 of virtual buttons displayed on the touch screen display 33. The three rows 136, 138, 140 of virtual buttons of the virtual keyboard 134 are located in the touch-sensitive area that corresponds with the first matrix portion 110 and second matrix portion 132. The X and Y co-ordinates of a touch event on the touch screen display 33 at a location corresponding to any one of the displayed virtual buttons in the three rows 136, 138, 140 is determined from signals from the first matrix portion 110 and the second matrix portion 132 as described above. The X and Y co-ordinates are used by the processor 22 to determine an associated action to be performed. Thus, for example, when a user touch occurs at X and Y co-ordinates that correspond to the DEL button in the third row 140 of the virtual keyboard, the processor determines that a delete command has been selected based on the X and Y co-ordinates received from the electronic controller 35 and performs the associated action by, for example, deleting previously typed or selected text.

The fourth row 142 of virtual buttons 144, 146, 148, 150, 152 displayed on the touch screen display 33 are located at the respective touch-sensitive areas associated with the pads 122, 124, 126, 128, 130 of the first capacitive touch sensor circuit layer 88, as described above. A touch event at the virtual button 144 causes a signal to be sent through the associated discrete circuit 112 as a result of capacitive coupling with the pad 122. Similarly, a touch event at the virtual button 146 causes a signal to be sent through the associated discrete circuit 114 as a result of capacitive coupling with the pad 124. A touch event at the virtual button 148 causes a signal to be sent through the associated discrete circuit 116 as a result of capacitive coupling with the pad 126. A touch event at the virtual button 150 causes a signal to be sent through the associated discrete circuit 118 as a result of capacitive coupling with the pad 128. A touch event at the virtual button 152 causes a signal to be sent through the associated discrete circuit 120 as a result of capacitive coupling with the pad 130.

In use, any of the virtual buttons 144, 146, 148, 150, 152 in the fourth row 142 of virtual buttons can be touched alone or in combination with the other virtual buttons 144, 146, 148, 150, 152 in the fourth row or in combination with one of the virtual buttons in any of the three rows 136, 138, 140 of virtual buttons that are located in the touch-sensitive area that corresponds with the first matrix portion 110 and the second matrix portion 132. Thus, more than one of the virtual buttons of the virtual keyboard 134 can be touched simultaneously, thereby providing a touch screen device in which multiple simultaneous touches on the touch-sensitive overlay 34 can be discerned. It will be appreciated that a touch event at any one of the virtual buttons results in the processor 22 determining an associated action to be performed. Simultaneous touching of any of the virtual buttons 144, 146, 148, 150, 152 in the fourth row with other virtual buttons 144, 146, 148, 150, 152 in the fourth row or any one of the virtual buttons in any of the three rows 136, 138, 140 can result in the processor 22 determining an action based on the combination of touch events at the virtual buttons.

To aid the user in determining location of virtual keys, the cover lens 96 can include raised ridges circumscribing or between each of the virtual keys, thereby providing a tactile guide to the user.

In the example shown in Figures 4A, 4B and 5, six discrete touch-sensitive areas are provided on the touch screen. It will be appreciated that six discrete touch-sensitive areas are shown for exemplary purposes only and any suitable number of discrete touch-sensitive areas can be provided. Further, the keyboard layout of Figure 5 is shown for exemplary purposes only as any keyboard layout or any other suitable virtual buttons can be provided.

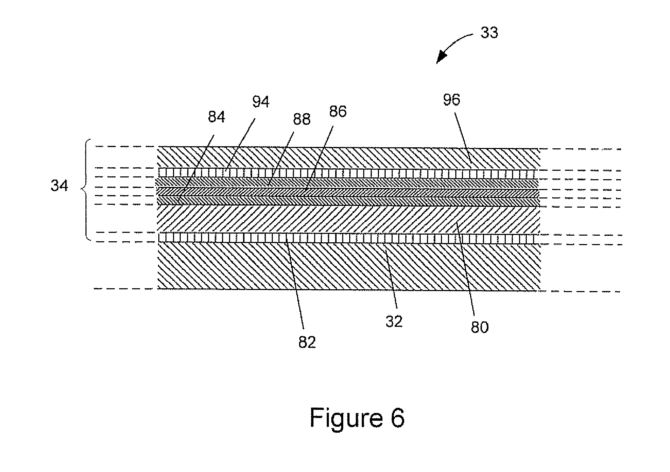

Referring now to Figure 6, there is shown a representative sectional side view of a touch screen display 33 according to another exemplary embodiment (not to scale). The touch screen display 33 is a capacitive touch-screen display 33 including the display device 32, and the touch-sensitive overlay 34. The touch-sensitive overlay 34 includes a number of layers in a stack and is fixed to the display 32 via a suitable optically clear adhesive 82 such as an Optically Clear Laminating Adhesive available from 3M^{™}. In the present example, the layers include a substrate 80 fixed to the LCD display 32 by a suitable adhesive 82, a ground shield layer 84 deposited on the substrate 80, a first thin-film deposited barrier layer 86, a first capacitive touch sensor circuit layer 88 and a cover lens 96 fixed to the first capacitive touch sensor circuit layer 88 by a suitable adhesive. Thus, the touch screen display 33 of the present exemplary embodiment includes only a single capacitive touch sensor circuit layer 88 and a single thin film deposited barrier layer 86. Again, the capacitive touch sensor circuit layer 88 is patterned on the thin film deposited barrier layer 86, with discrete circuits for providing associated discrete touch-sensitive areas on the touch screen display 33.

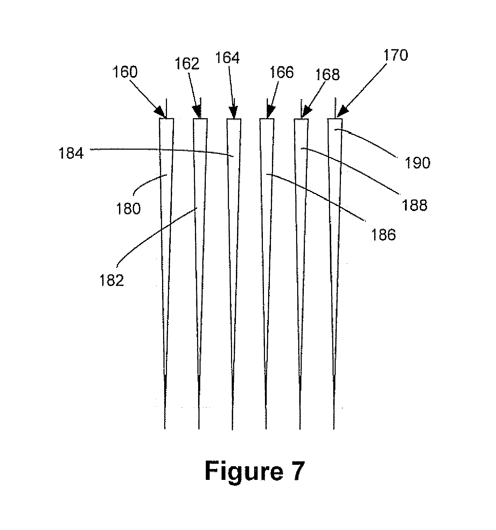

Referring now to Figure 7, there is shown an exemplary capacitive touch sensor circuit layer 88 according to one embodiment. As shown, the capacitive touch sensor circuit layer 88 includes six discrete circuits 160, 162, 164, 166, 168, 170 for providing discrete touch-sensitive areas. Each of the six discrete circuits 160, 162, 164, 166, 168, 170 includes conductive lead lines for connecting to the electronic controller 35 shown in Figure 1 via, for example, a printed circuit board. In the present example, each discrete circuit 160, 162, 164, 166, 168, 170 includes a respective elongate triangularly shaped conductive pad 180, 182, 184, 186, 188, 190 that extends across the touch screen display 33 and has a respective discrete touch-sensitive area on the touch screen display 33. Each of the pads 180, 182, 184, 186, 188, 190 is spaced from adjacent ones of the pads 180, 182, 184, 186, 188, 190 and is separately connected to the electronic controller 35 to provide the discrete touch-sensitive areas. A touch event at any one of the discrete touch-sensitive areas causes a signal to be sent to the electronic controller 35 in response to a change in the electric field as a result of capacitive coupling between the finger of the user and the respective one of the pads 180, 182, 184, 186, 188, 190. The location of capacitive coupling along the length of the one of the pads 180, 182, 184, 186, 188, 190 is determined by the controller based on the signal received. With triangularly shaped pads, the location of a touch along the taper can be determined as the resulting capacitance differs based on the width of the respective one of the pads 180, 182, 184, 186, 188, 190 at the touch location. Therefore, the capacitance sensed by the controller 35 differs based on the touch location along the respective one of the pads 180, 182, 184, 186, 188, 190. Thus, the location of touch on the discrete touch-sensitive area can be determined.

In use, each of the discrete touch-sensitive areas can be touched alone or in combination with other discrete touch-sensitive areas that correspond with the discrete circuits 160, 162, 164, 166, 168, 170. Thus, more than one of the touch-sensitive areas can be touched simultaneously. It will be appreciated that a touch event at any of the touch-sensitive areas results in the processor 22 determining an associated action to be performed, based on the location of touch along the touch-sensitive area. Simultaneous touching of two or more of the touch-sensitive areas can result in the processor 22 determining an action based on the combination of touch events at the touch-sensitive areas. Again, it will be appreciated that a touch screen device is provided in which multiple simultaneously touches on the touch-sensitive overlay can be discerned.

The examples above are described with particular reference to exemplary materials. The materials used can differ, however. For example, the capacitive touch sensor circuit layers can be patterned ITO layers as described, or can be any other suitable material such as antimony tin oxide (ATO) or aluminum doped zinc oxide (ZAO). Similarly, the ground shield layer can be any suitable material such as ITO , antimony tin oxide (ATO) or aluminum doped zinc oxide (ZAO). Further, the barrier layer can be any suitable barrier material including silicon dioxide or silicon nitride.

While the embodiments described herein are directed to particular implementations of the touch screen display and the portable electronic device, it will be understood that modifications and variations to these embodiments are within the scope and sphere of the present application. For example, the size and shape of many of the features, including the touch sensor circuit layer patterns can differ while still providing the same function. Further, the layers of the touch screen display shown in the representative sectional side views can vary. For example, a second substrate can be used between the first and second capacitive touch sensor circuit layers. In another alternative, the ground shield layer is not used as the controller can synchronize the reading of the capacitive touch sensor circuit layer or layers with the LCD scanning such that the reading is carried out during a period of time during which lines of the LCD display are not being drawn.

Many other modifications and variations may occur to those skilled in the art. All such modifications and variations are believed to be within the sphere and scope of the present application.

## Claims

1. A touch screen display unit comprising:
a display device; and
a touch-sensitive overlay disposed on the display device, the touch-sensitive overlay comprising at least one capacitive touch sensor circuit layer disposed on a substrate and patterned with discrete circuits, ones of the discrete circuits providing associated discrete touch-sensitive areas on an outer touch surface thereof.

2. The touch screen display unit according to claim 1, wherein a single one of the at least one capacitive touch sensor circuit layer comprises at least two discrete circuits providing associated discrete touch-sensitive areas on an outer touch surface thereof.

3. The touch screen display unit according to claim 1 or claim 2, wherein the at least one capacitive touch sensor circuit layer comprises a single capacitive touch sensor circuit layer.

4. The touch screen display unit according to any one of claims 1 to 3, wherein the outer touch surface comprises a protective cover layer disposed on the at least one capacitive touch sensor circuit layer.

5. The touch screen display unit according to claim 4, wherein the cover layer comprises ridges defining at least one of the touch-sensitive areas.

6. The touch screen display unit according to any one of the preceding claims, wherein one of the discrete circuits is sized for providing a touch-sensitive area for a single virtual button.

7. The touch screen display unit according to any one of the preceding claims, wherein ones of the discrete circuits are sized for providing respective touch-sensitive areas for respective single virtual buttons.

8. The touch screen display according to any one of the preceding claims, wherein at least one of the discrete circuits is triangular shaped for providing a discrete touch-sensitive area.

9. The touch screen display according to any one of the preceding claims, wherein the at least one capacitive touch sensor circuit layer comprises a plurality of discrete circuits patterned in triangular shapes for providing respective discrete touch-sensitive areas.

10. An electronic device comprising:
a base;
a touch screen display according to any one of claims 1 to 9; and
operational components comprising a controller connected to the touch-sensitive overlay and a processor connected to the controller and the display device for providing a graphical user interface.

11. The electronic device according to claim 10, wherein the discrete circuits are arranged for providing keyboard functions for simultaneous input from at least two of the discrete circuits.

## Amended claims

### Amended claims in accordance with Rule 137(2) EPC.

**1.** A touch screen display unit (33) comprising:
a display device (32) ; and
a touch-sensitive overlay (34) disposed on the display device (32), the touch-sensitive overlay (34) comprising at least one capacitive touch sensor circuit layer 88 disposed on a substrate (80) and patterned with circuits (112, 114, 116, 118, 120) providing associated discrete touch-sensitive areas (144, 146, 148, 150, 152) on an outer touch surface thereof, at least some of the circuits being discrete circuits arranged such that a single one of the discrete touch-sensitive areas (144, 146, 148, 150, 152) is provided by a respective single one of the discrete touch-sensitive circuits (112, 114, 116, 118, 120).

**2.** The touch screen display unit (33) according to claim 1, wherein a single one of the at least one capacitive touch sensor circuit layer 88 comprises at least two discrete circuits (112, 114, 116, 118, 120) providing associated discrete touch-sensitive areas (144, 146, 148, 150, 152) on an outer touch surface thereof.

**3.** The touch screen display unit (33) according to claim 1 or claim 2, wherein the at least one capacitive touch sensor circuit layer (88) comprises a single capacitive touch sensor circuit layer.

**4.** The touch screen display unit (33) according to any one of claims 1 to 3, wherein the outer touch surface comprises a protective cover layer (96) disposed on the at least one capacitive touch sensor circuit layer (88).

**5.** The touch screen display unit (33) according to claim 4, wherein the cover layer (96) comprises ridges defining at least one of the touch-sensitive areas.

**6.** The touch screen display unit (33) according to any one of the preceding claims, wherein one of the discrete circuits (112, 114, 116, 118, 120) is sized for providing a touch-sensitive area for a single virtual button (144, 146, 148, 150, 152).

**7.** The touch screen display unit (33) according to any one of the preceding claims, wherein ones of the discrete circuits (112, 114, 116, 118, 120) are sized for providing respective touch-sensitive areas for respective single virtual buttons (112, 114, 116, 118, 120).

**8.** The touch screen display (33) according to any one of the preceding claims, wherein at least one of the discrete circuits (160, 162, 164, 166, 168, 170) is triangular shaped for providing a discrete touch-sensitive area.

**9.** The touch screen display (33) according to any one of the preceding claims, wherein the at least one capacitive touch sensor circuit layer (88) comprises a plurality of discrete circuits (160, 162, 164, 166, 168, 170) patterned in triangular shapes for providing respective discrete touch-sensitive areas.

**10.** An electronic device (20) comprising:
a base (72);
a touch screen display (33) according to any one of claims 1 to 9; and
operational components comprising a controller (35) connected to the touch-sensitive overlay (34) and a processor (22) connected to the controller (35) and the display device (32) for providing a graphical user interface.

**11.** The electronic device (20) according to claim 10, wherein the discrete circuits (112, 114, 116, 118, 120) are arranged for providing keyboard functions for simultaneous input from at least two of the discrete circuits.
